# EUROPEAN PATENT SPECIFICATION

(11) **EP 0 604 076 B1**
(45) Date of publication and mention of the grant of the patent: **12.03.1997**
(21) Application number: 93309962.4
(22) Date of filing: 10.12.1993
(51) Int. Cl.: H02K 5/14, H01R 39/38, H01R 39/18

(54) **Brush assembly for an electric motor**
Bürstenanordnung für einen elektrischen Motor
Dispositif à balai pour moteur électrique

(30) Priority: 22.12.1992 GB 9226648
(43) Date of publication of application: 29.06.1994
(73) Proprietor: JOHNSON ELECTRIC S.A., CH-2300 La Chaux-de-Fonds (CH)
(72) Inventor: Strobl, Georg, D-7000 Stuttgart 1 Frauenkopf (DE)
(74) Representative: Higgins, Michael Roger

(56) References cited:
- DE-C- 705 948
- DE-U- 7 107 035
- DATABASE WPI Week 7816, Derwent Publications Ltd., London, GB; AN 78D2028A & SU-A-551 740

## Description

This invention relates to a brush assembly for an electric motor and in particular to an assembly providing a stable brush position for a short brush with expected low wear, as, for example, in a motor with a carbon commutator in a low voltage application.

Known brush assemblies are generally of two main types, either brushes mounted on leaf arms or guided brushes such as caged brushes. Leaf brushes are simple in construction but guided brushes are preferred when electrical noise is of concern. One source of electrical noise is the sideways floating and bouncing of the brush as it encounters irregularities in the brush path of a commutator or slipring. Leaf brushes continually change their position on the commutator surface. This is minimised by using a guided brush assembly.

Known guided brush assemblies for an electric motor having a commutator comprise a brush for sliding contact with the commutator, a brush terminal, a brush spring for urging the brush into contact with the commutator, and brush guiding means for guiding the brush towards the commutator.

Generally, the brush guiding means is a cage surrounding the brush on four sides and in which the brush is a loose sliding fit. The cage has an open end adjacent the commutator and the brush spring pushes the brush away from the opposite end. A brush tail or shunt is required to electrically connect the brush to the brush terminal as neither the spring nor the cage makes satisfactory electrical contact with the brush, especially in a low voltage application.

Brushes for caged brush assemblies are usually long brushes. They are used in situations where substantial wear on the brush is expected over the life of the motor and the spring is long to provide a constant spring tension over the range of expected wear. The brush shunt is connected to the brush by being embedded into the end of the brush remote from the commutator (the non-working end). At the end of the brush life the shunt should not be exposed as contact with the commutator by the shunt may lead to damage of the commutator surface. This connection requires a not insignificant portion of the brush. This is generally tolerated as the cage itself requires a minimum length of brush (dead length) to ensure avoidance of misalignment of the brush in the cage which could result in the brush becoming jammed and thus not providing satisfactory contact with the commutator. As will be realised, such an arrangement requires an assembly of considerable size.

Therefore, in low noise, low wear situations, a caged brush assembly requires a brush length of excessive size compared with the expected wear. The normal leaf brush arrangement is not suitable for low noise situations because of the requirement to make the brush arm as long as possible to provide a constant spring force. Although this arrangement can satisfactorily handle short brushes, it is inherently unstable resulting in a significant amount of noise.

GB0345523A describes a guide brush assembly in which the brush is urged towards the commutator by a a coil spring located around a pin connecting the brush to the frame of the brush assembly. A bent plate spring is provided on the sides of the brush to prevent movement of the brushes circumferentially around the surface of the commutator. The construction is complicated requiring a coil spring, a brush with an embedded shunt, a pin fixed to the end of the brush, a brush assembly frame and a separate brush terminal.

SU-A-551 740 discloses a brush soldered to a leaf spring or flat spring which is connected at its ends to a brush support by two insulated spring holders. On the back of the spring where the brush is attached, a pin is soldered extending away from the brush. The pin of the spring where the brush is attached, a pin is soldered extending away from the brush. The pin is slidably received in a hole formed in the brush holder.

DE-U-7 107 035 discloses a brush assembly wherein the pin is fixed to the brush support and the guide hole is formed in the brush, the guide hole being a blind hole.

Thus there is a need for a brush assembly which can handle short brushes for use in low wear situations and provide a stable or moderately stable brush position.

The purpose of the invention is to at least reduce the disadvantages of known brush assemblies and, in particular, to provide brush assemblies which provide stable or relatively stable brush positions.

This is achieved by providing a brush assembly with a brush guiding means comprising a guide pin co-operating with a hole for guiding the brush towards the commutator or slipring.

Thus, the present invention provides a brush assembly comprising; a brush; a brush terminal; a leaf spring formed from a strip of resilient, electrically conductive material,
urging the brush into contact with the commutator, the spring having ends and the brush being attached to the spring at a portion intermediate the ends, and
a guide pin co-operative with a guide hole for guiding the brush to the commutator, characterised in that;
the guide hole is formed in the brush and passes through the brush; and
the guide pin is sized to be a neat sliding fit within the guide hole, is rigidly attached to the brush terminal at a first end and arranged so that in use it extends towards the commutator with a free end located adjacent the surface of the commutator.

Preferably, means are provided to prevent rotation of the brush about the guide pin. This may be most conveniently provided by the spring.

Preferably, the spring is a brush leaf formed from a strip of resilient, electrically conductive material having two ends fixed to the brush terminal and an intermediate portion to which the brush is attached, the spring thus being formed as a loop.

The looped leaf spring provides a relatively stable brush position compared with normal or floating leaf brush assemblies by "fixing" the "free" end of the leaf. By fixing both ends to a common point, the brush terminal, construction is simplified by allowing the assembly to be completed before mounting to the end cap or brush holder of the motor. By precise mounting of the brush terminal the brush assembly is precisely located.

It is convenient for the looped brush leaf to be formed with a permanent set, ideally set so that each half of the leaf forms a "U" although other arrangements including V-shaped halves or non-set leaves are envisaged.

If the motor is to be driven in both directions there may be an advantage in having the leaf symmetrical about a transverse plane whereas for single direction motors, one half of the leaf may be stronger or shorter than the other half to provide an uneven bias on the brush to affect the operating characteristics of the motor or to counter the drag effect on the brush by the commutator etc.

The spring need not be looped as the guide will maintain the orientation and position of the brush. The spring may be a leaf type spring and may resemble half of the looped leaf as described above, with or without a permanent set. The spring thus acts on the brush to urge the brush axially of the guide pin. However, the looped brush leaf is preferred as in that embodiment, in use, the forces on the guide pin are substantially transverse created by drag between the commutator and the brush.

Preferably, the guide hole is formed in the brush and one end of the guide pin is rigidly attached to the brush terminal, the pin being a neat sliding fit within the guide hole.

A clearance is preferably provided in the brush in the region in which, in use, the free end of the guide pin is located. This clearance avoids contact between the end of the guide pin and the inside surface of the guide hole which otherwise may lead to chaffing of the guide hole. This clearance may be in the form of a counter bore in the guide hole or even a channel formed across the base of the brush.

Such a channel, if so formed, has the added advantage of providing a convenient method of lifting the brush for insertion of the commutator. It also provides a quick visual indication of wear. It may provide an increase in the cross-resistance of the brush which has certain advantages in brush construction theory by providing first and second circumferentially spaced commutator contact portions.

Cross-resistance is the electrical resistance of the brush measured between one commutator contact face to another or from the leading edge to the trailing edge of the contact surface of the brush. Through-brush resistance is the electrical resistance of the brush measured between the contact surface and the brush connector (leaf spring or shunt), i.e., the resistance of the current path through the brush. Unfortunately, maximum commutation usually occurs at the point where the brush substantially equally straddles two commutator segments leading to large short circuit currents across the brush. By increasing the cross-resistance of the brush, it is possible to reduce this shorting effect and consequential sparking which occurs as the brush transfers from one segment to the next. However, while trying to increase the cross-resistance, it is important to maintain the through-resistance as low as possible as this effects the power of the motor.

Where the brush is to be used in single direction motor, the first contact portion may have a greater cross-sectional area than the second contact portion to increase the cross-section further.

Thus this construction allows the cross-resistance of the brush to be increased simply without the use of sections of different materials.

By forming the base of the brush in the shape of a V, the brush will have two lines of contact with the commutator. If the shape of the V is chosen so that the lines of contact are between the outer edge of the brush and midway along the arm of the V a stable brush contact is formed because of the wide base. However, if the lines of contact are closer to the mid point of the arms, the leading edges of the brush do not need to be chamfered to avoid chaffing on the edges of the commutator segments.

The guide pin may be hollow. This allows the guide pin to be used for additional functions such as providing a path for brush/commutator lubricants or supporting an optical fibre close to the commutator surface, etc. An optical fibre so supported may by used to count segments in a multi-segment motor in conjunction with a position monitor or used with an infra-red temperature detector to monitor the temperature of the commutator surface.

Preferably, the brush leaf has a slot or series of holes formed in the strip between an end fixed to the brush terminal and where the brush is mounted. The slot may be a blind slot or an open slot i.e. dividing the end into two. For the looped brush leaf, slots may be formed in both halves of the leaf. The slots are used to reduce spring tension and to relieve any internal tension within the brush spring caused when forming or mounting the leaf, which may otherwise lead to twisting of the brush. However, the cross-sectional area of the brush leaf must be sufficient to carry the expected maximum current of the motor carried by the brush.

The leaf may be formed with a finger which is releasably engageable with the brush terminal to hold the brush in a retracted position. This allows the brush to be held retracted while the motor is being assembled, at least while the rotor is being fitted to the end cap so that the brushes will be held clear of the commutator and then released to engage the commutator. This avoids the need for other brush lifting techniques. The finger could be formed from the material of the brush leaf removed to form one or both slots or to form the hole through which the brush is fitted to the leaf. Two or more fingers could be provided although it is envisaged that one would be sufficient.

Preferred brush assemblies according to the invention, will now be described, by way of example only, with reference to the accompanying drawings.
Figure 1 is a diagrammatic representation of a brush assembly according to the invention;
Figure 2 is a plan view of the brush assembly of Figure 1 fitted to an end cap shown in section;
Figure 3 is a view similar to Figure 2 of a modified brush assembly;
Figure 4 is a perspective view of an unmounted spring complete with brush;
Figure 5 is a view similar to Figure 1 illustrating a brush latching mechanism; and
Figure 6 is an illustrative representation of a modified brush for use with a brush assembly according to the invention.

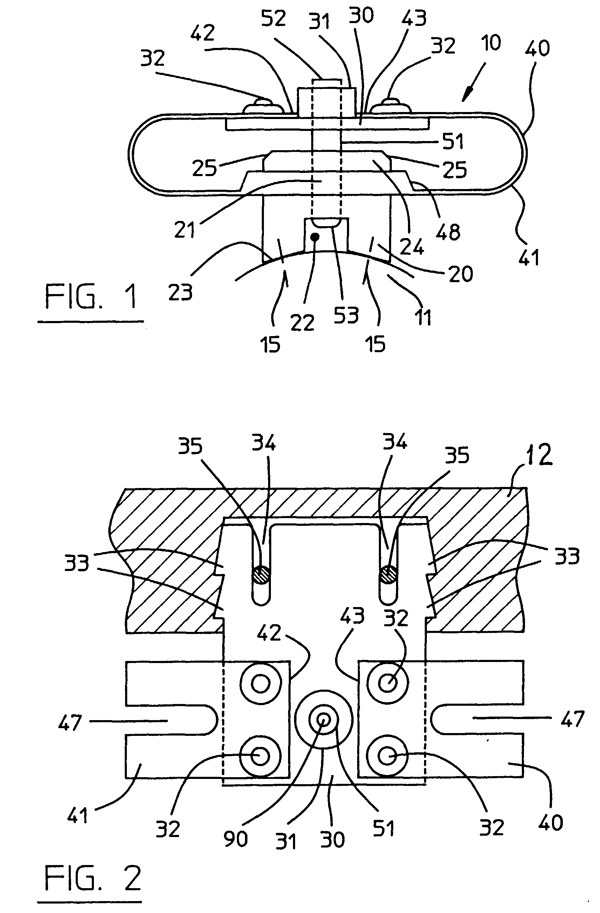

As shown in Figures 1 and 2, the preferred brush assembly 10 has a brush 20, arranged to be in sliding contact with a commutator (or slipring) 11, a generally plate-like brush terminal 30, and a spring 40 which not only urges the brush into contact with the commutator but also electrically connects the brush with the brush terminal 30.

Brush guiding means 50 comprises a guide pin 51 having a fixed end 52, pressed into a boss 31 formed on the brush terminal 30, and a free end 53. The guide pin 51 cooperates with a guide hole 21 formed in the brush to guide the brush towards the commutator 11. The guide pin 51 is a neat sliding fit in the guide hole 21 to locate the position of the brush on the commutator in a stable manner.

The guide pin may be hollow. In Figure 2, the guide pin 51 is shown with an axially extending through hole 90. This hole may have many uses as it provides a stable position close to the commutator surface without fear of electrically fouling the brushes or the commutator. Such uses may include providing a path for commutator lubricant used to provide lubrication between the commutator and the brush. This is possible due to the closeness of the end of the guide pin to the commutator surface. An alternative use is to provide a means for mounting an optic fibre close to the surface of the commutator which can then be used, with suitable control circuitry to monitor the angular position of the rotor, the speed of rotation of the rotor, the number of revolutions of the rotor and/or the temperature of the surface of the commutator.

A channel 22 is formed across the base 23 of the brush to provide a path for a lifting finger used during assembly of the motor to lift the brush to clear the commutator as the end cap is fitted to the rotor. The channel also provides a visual wear indicator. In use the free end 53 of the pin 51 would be located in this channel to avoid chaffing the inside of the guide hole 21.

The base 23 of the brush 20 is V-shaped with the point of the V coinciding with the channel 22. This arrangement provides a stable brush contact by providing two spaced apart lines of contact 15 between the brush and the commutator, which quickly wear-in to provide two areas of contact.

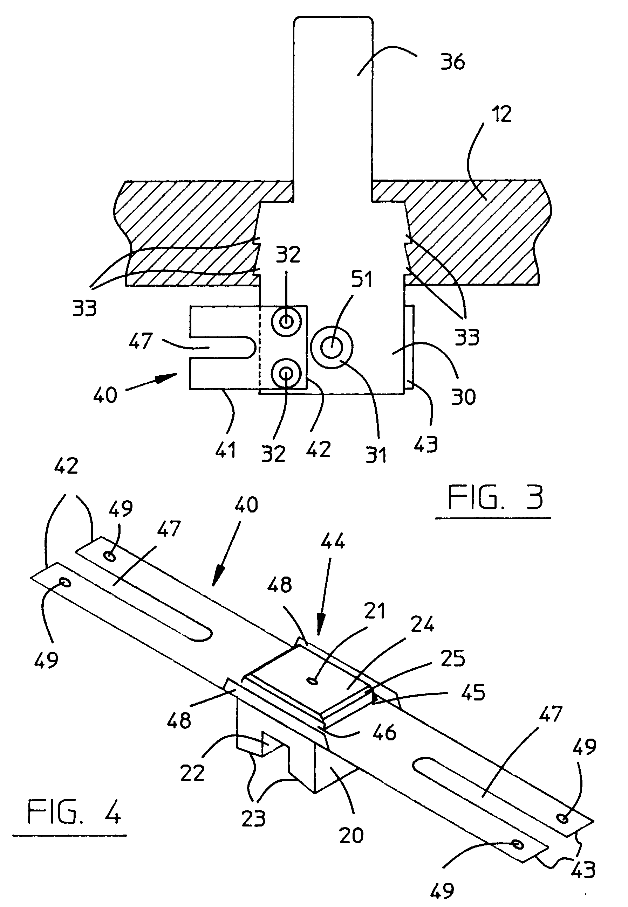

The top of the brush is provided with a single castellation 24 which passes through a brush mounting hole 45 to fix the brush to the brush spring 40 as more clearly shown in Figure 4. Bevels 25 help ease the brush through the hole.

The spring 40 is a brush leaf fashioned from an elongate strip 41 of resilient electrically conductive material such as beryllium copper. The spring may be double sided i.e. formed in a loop with both ends 42, 43 connected to the brush terminal as shown in Figure 1 and 2, or single sided as shown in Figure 3 with only one end 42 connected to the brush terminal and the other end 43 left free.

The fixed ends are provided with holes 49 for fixing the spring to the brush terminal 30 by riveting. The brush mounting hole 45 is formed in an intermediate portion 44. The edges of the hole form resilient tabs 46 which grip the castellation 24 of the brush as it is pushed into the hole to make electrical contact and to hinder its withdrawal.

Ribs 48 are formed along the edges of the strip adjacent the mounting hole 45 to strengthen and stiffen this region which is otherwise considerably weakened by the provision of the mounting hole.

The spring of Figure 2 is slotted on both sides between the brush mounting hole 45 and the ends 42, 43. The slots release any internal tension which may otherwise cause twisting of the spring resulting in twisting of the brush. The slots also allow the spring tension to be varied and the size of the slots may be chosen to vary the spring tension as required for a particular application. However, the cross-sectional area of the leaf must be sufficient to carry the expected maximum current to be carried by the brush. The slots may be blind as in Figures 2 and 3 or may be open as in Figure 4 resulting in bifurcated ends 42, 43. The single sided spring of Figure 3 has a single slot 47 between the brush mounting hole 45 and the terminal end 42.

The brush terminal 30 is plate-like with a boss 31 for receiving the fixed end 52 of the guide pin 51. The terminal also has studs 32 for riveting the spring 40 to the terminal.

In the embodiment shown in Figure 2, the terminal extends into and is captured by the end cap 12 of the motor. Barbs 33 co-operate with the end cap to help prevent removal of the terminal. Wire connecting slots 34 are provided in that end of the terminal which is inserted into the end cap to engage and make electrical contact with wires 35 in the end cap. These wires may be for connecting the brush terminal to a motor terminal (either internal or external) or may be lead wires for other motor components such as a choke, capacitor or heat sensitive switch.

Figure 3 illustrates an alternative terminal arrangement in which the brush terminal extends right through the end cap 12 to form an external motor terminal 36.

Any flexibility in the connection between the brush terminal and the end cap will be reflected in the stability of the brush position.

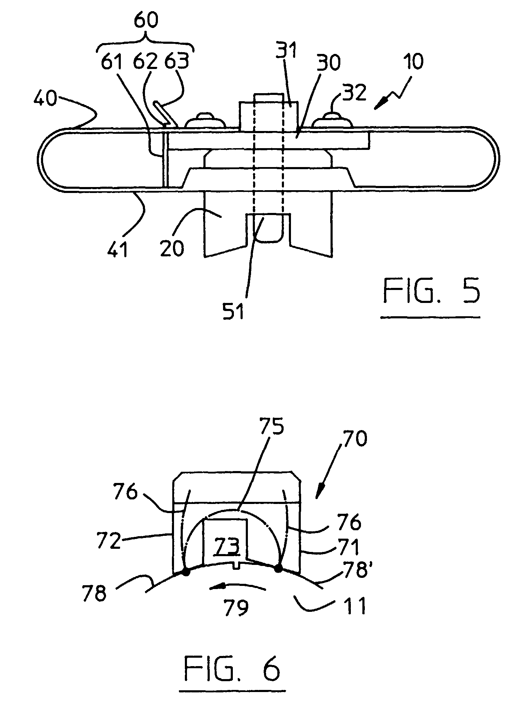

Figure 5 illustrates a brush assembly similar to the assembly of Figure 1. This assembly 10 has the additional feature of a brush latching mechanism 60. The latching mechanism 60 comprises a finger 61 formed on the spring 40. The finger is formed from the material cut from the strip 41 to form one of the slots 47.

The finger 61 has a distal end arranged to engage the brush terminal when the spring is fully compressed by a pressing the brush 20 against the brush terminal 30. As shown in Figure 6, the distal end has a step 62 which latches onto the upper surface of the brush terminal or onto the end of the spring itself where the ends of the spring are not divided to hold the spring and thus the brush in the retracted position.

The step 62 is preceded by a ramp or sloping portion 63 which co-operates with the brush terminal to move the finger to the left as the brush terminal contacts the finger until the step clears the terminal at which time it resiliently returns to the right to latch the brush assembly into the retracted position. The brush assembly is unlatched by moving the finger to the left until the step is clear of the brush terminal allowing the spring to urge the brush away from the brush terminal 30.

Holes, not shown, may be provided in the end cap to provide access for a rod or tool to move the finger to unlatch the brush assembly. The finger may remain in readiness to latch the assembly again should the brush be fully retracted for example, during maintenance or the unlatching action may be sufficient to cause a permanent deformation of the finger 61 so that the latching mechanism is no longer functional and the finger does not rub on the terminal.

In Figure 6, a modified brush 70 is shown in side view. The construction of this brush increases the cross-resistance of the brush without significantly increasing the through resistance. This is achieved by dividing the commutator contact end of the brush into a first commutator contact portion 71 and a second commutator contact portion 72 by a channel 73. The channel runs parallel to the longitudinal axis of the commutator so that the first portion 71 and the second portion 72 contact the commutator 11 at circumferentially spaced locations. By this construction, the cross-brush current follows current path 75 which is almost twice as long as the normal current path 76 although, in practice, paths of the same length would be expected. This is a significant increase in the cross-resistance.

For motors which rotate in one direction only e.g. in the direction of arrow 79, the first portion 71 may be of greater cross-sectional area than the second portion 72 as illustrated to increase the cross-resistance of the brush even further. Thus, as the brush 70 moves from contact with commutator segment 78 into contact with segment 78', motor current is fed to segment 78' and the shorting resistance between segments 78 and 78' becomes important.

## Claims

1. A brush assembly for an electric motor having a commutator, the assembly comprising:
a brush (20);
a brush terminal (30);
a leaf spring (40) formed from a strip of resilient, electrically conductive material, urging the brush (20) into contact with the commutator (11), the spring (40) having ends (42, 43) and the brush (20) being attached to the spring (40) at a portion (44) intermediate the ends, and
a guide pin (51) co-operative with a guide hole (21) for guiding the brush (20) to the commutator (11), characterised in that;
the guide hole (21) is formed in the brush (20) and passes through the brush; and
the guide pin (51) is sized to be a neat sliding fit within the guide hole (21), is rigidly attached to the brush terminal (30) at a first end (52) and arranged so that in use it extends towards the commutator (11) with a free end (53) located adjacent the surface of the commutator.

2. A brush assembly according to claim 1 characterised in that a clearance is formed in the brush in the region in which the free end (53) of the guide pin (51) is located during use.

3. A brush assembly according to claim 1 or claim 2 further comprising means to prevent rotation of the brush (20) about the guide pin (51).

4. A brush assembly according to any one of the preceding claims characterised in that the two ends (42,43) of the leaf spring (40) are fixed to the brush terminal (30) so that the spring (40) and brush terminal (30) form a closed loop.

5. A brush assembly according to claim 4 characterised in that the brush leaf has two slots (47) respectively formed between the intermediate portion (44) and the ends (42,43).

6. A brush assembly according to claim 5 characterised in that the slots (47) extend to the ends (42,43) to form bifurcated ends.

7. A brush assembly according to any one of the preceding claims characterised in that the brush leaf is symmetrical.

8. A brush assembly according to any one of the preceding claims characterised in that the spring (40) has a finger (60) which is releasably engageable with the brush terminal (30) to hold the brush (20) in a retracted position.

9. A brush assembly according to any one of the preceding claims characterised in that the guide pin (51) is hollow.

10. A brush assembly according to any one of the preceding claims characterised in that the brush (20) has a V-shaped base (23) providing two lines of contact (15) between the base of the brush and the commutator (11).

11. A brush assembly according to any one of the preceding claims characterised by the brush (20) being constructed from a single composition and divided into a first commutator contact portion (71) and a second commutator contact portion (72) by a channel (73) such that the first and second contact portion, in use, contact the commutator (11) at circumferentially spaced locations.

12. A brush assembly according to claim 11 characterised in that the first commutator contact portion (71) has a greater cross-sectional area than the second commutator contact portion (72).

## Patentansprüche

1. Bürstenbaugruppe für einen Elektromotor, der einen Kommutator besitzt, wobei die Baugruppe aufweist:
eine Bürste (20);
eine Bürstenklemme (30);
eine Blattfeder (40), die aus einem Streifen eines elastischen, elektrisch leitfähigen Materials gebildet wurde, und die die Bürste (20) mit dem Kommutator (11) in Berührung bringt, wobei die Feder (40) die Enden (42, 43) aufweist, und wobei die Bürste (20) an der Feder (40) in einem Abschnitt (44) zwischen den Enden befestigt ist; und
einen Führungsstift (51), der mit einem Führungsloch (21) zusammenwirkt, um die Bürste (20) zum Kommutator (11) zu führen;
dadurch gekennzeichnet, daß:
das Führungsloch (21) in der Bürste (20) gebildet wird und durch die Bürste hindurchgeht; und
der Führungsstift (51) so bemessen ist, daß er einen reinen Gleitsitz innerhalb des Führungsloches (21) aufweist, und daß er starr mit der Bürstenklemme (30) an einem ersten Ende (52) befestigt und so angeordnet ist, daß er sich beim Einsatz in Richtung des Kommutators (11) erstreckt, wobei das freie Ende (53) angrenzend an die Oberfläche des Kommutators angeordnet ist.

2. Bürstenbaugruppe nach Anspruch 1, dadurch gekennzeichnet, daß ein Zwischenraum in der Bürste in dem Bereich gebildet wird, in dem sich das freie Ende (53) des Führungsstiftes (51) während des Einsatzes befindet.

3. Bürstenbaugruppe nach Anspruch 1 oder 2, die außerdem eine Einrichtung aufweist, die die Drehung der Bürste (20) um den Führungsstift (51) verhindert.

4. Bürstenbaugruppe nach einem der vorhergehenden Ansprüche, dadurch gekennzeichnet, daß die zwei Enden (42, 43) der Blattfeder (40) an der Bürstenklemme (30) so befestigt sind, daß die Feder (40) und die Bürstenklemme (30) einen geschlossenen Kreis bilden.

5. Bürstenbaugruppe nach Anspruch 4, dadurch gekennzeichnet, daß die Bürstenblattfeder zwei Schlitze (47) aufweist, die entsprechend zwischen dem Zwischenabschnitt (44) und den Enden (42, 43) gebildet werden.

6. Bürstenbaugruppe nach Anspruch 5, dadurch gekennzeichnet, daß sich die Schlitze (47) zu den Enden (42, 43) erstrecken, um gabelförmige Enden zu bilden.

7. Bürstenbaugruppe nach einem der vorhergehenden Ansprüche, dadurch gekennzeichnet, daß die Bürstenblattfeder symmetrisch ist.

8. Bürstenbaugruppe nach einem der vorhergehenden Ansprüche, dadurch gekennzeichnet, daß die Feder (40) einen Finger (60) aufweist, der trennbar mit der Bürstenklemme (30) in Eingriff kommen kann, um die Bürste (20) in der zurückgezogenen Position zu halten.

9. Bürstenbaugruppe nach einem der vorhergehenden Ansprüche, dadurch gekennzeichnet, daß der Führungsstift (51) hohl ist.

10. Bürstenbaugruppe nach einem der vorhergehenden Ansprüche, dadurch gekennzeichnet, daß die Bürste (20) einen V-förmigen Unterbau (23) aufweist, der zwei Berührungslinien (15) zwischen dem Unterbau der Bürste und dem Kommutator (11) bereitstellt.

11. Bürstenbaugruppe nach einem der vorhergehenden Ansprüche, dadurch gekennzeichnet, daß die Bürste (20) aus einer einzigen Zusammensetzung konstruiert ist und in einen ersten Berührungsabschnitt (71) des Kommutators und einen zweiten Berührungsabschnitt (72) des Kommutators durch einen Kanal (73) so geteilt wird, daß der erste und der zweite Berührungsabschnitt beim Einsatz den Kommutator (11) an Stellen berühren, die auf dem Umfang im Abstand vorhanden sind.

12. Bürstenbaugruppe nach Anspruch 11, dadurch gekennzeichnet, daß der erste Berührungsabschnitt (71) des Kommutators eine größere Querschnittsfläche aufweist als der zweite Berührungsabschnitt (72) des Kommutators.

## Revendications

1. Assemblage à balai pour moteur électrique à collecteur, l'assemblage comprenant :
un balai (20);
une borne de balai (30);
un ressort à lame (40) formé d'une bande de matériau élastique électriquement conducteur, poussant le balai (20) en contact avec le collecteur (11), le ressort (40) ayant des extrémités (42, 43) et le balai (20) étant fixé au ressort (40) dans une partie (44) entre les extrémités; et
une broche de guidage (51) coopérant avec un trou de guidage (21) pour guider le balai (20) par rapport au collecteur (11);
caractérisé en ce que:
le trou de guidage (21) est formé dans le balai (20) et traverse le balai; et
la broche de guidage (51) est dimensionnée de manière à avoir un ajustage à glissement facile dans le trou de guidage (21), est fixée rigidement à la borne de balai (30) à une première extrémité (52) et est disposée de façon qu'en service elle s'étende vers le collecteur (11) avec une extrémité libre (53) située près de la surface du collecteur.

2. Assemblage à balai selon la revendication 1, caractérisé en ce qu'il existe un jeu dans le balai, dans la région où est située l'extrémité libre (53) de la broche de guidage (51) pendant le fonctionnement.

3. Assemblage à balai selon la revendication 1 ou 2, comprenant, en outre, un moyen pour empêcher la rotation du balai (20) autour de la broche de guidage (51).

4. Assemblage à balai selon l'une quelconque des revendications précédentes, caractérisé en ce que les deux extrémités (42, 43) du ressort à lame (40) sont fixées à la borne de balai (30), de façon que le ressort (40) et la borne de balai (30) forment une boucle fermée.

5. Assemblage à balai selon la revendication 4, caractérisé en ce que la lame de balai a deux fentes (47) formées respectivement entre la partie intermédiaire (44) et les extrémités (42, 43).

6. Assemblage à balai selon la revendication 5, caractérisé en ce que les fentes (45) s'étendent jusqu'aux extrémités (42, 43) pour former des extrémités bifurquées.

7. Assemblage à balai selon l'une quelconque des revendications précédentes, caractérisé en ce que la lame de balai est symétrique.

8. Assemblage à balai selon l'une quelconque des revendications précédentes, caractérisé en ce que le ressort (40) a une languette (60) qui vient en contact amovible avec la borne de balai (30) pour maintenir le balai (20) en position de retrait.

9. Assemblage à balai selon l'une quelconque des revendications précédentes, caractérisé en ce que la broche de guidage (51) est creuse.

10. Assemblage à balai selon l'une quelconque des revendications précédentes, caractérisé en ce que le balai (20) a une base (23) en forme de V, qui forme deux lignes de contact (15) entre la base du balai et le collecteur (11).

11. Assemblage à balai selon l'une quelconque des revendications précédentes, caractérisé par le fait que le balai (20) est formé d'un seul matériau et est divisé entre une première partie de contact avec le collecteur (71) et une deuxième partie de contact avec le collecteur (72) par un canal (73), de façon que, en fonctionnement, les première et deuxième parties de contact viennent en contact avec le collecteur (11) en des emplacements écartés périphériquement.

12. Assemblage à balai selon la revendication 11, caractérisé en ce que la première partie de contact avec le collecteur (71) a une plus grande section transversale que la deuxième partie de contact avec le collecteur (72).
